# EUROPEAN PATENT APPLICATION

(11) **EP 4 538 777 A1**
(43) Date of publication of application: **16.04.2025**
(21) Application number: 23844782.5
(22) Date of filing: 09.02.2023
(51) Int. Cl.: G02B 27/28, B60K 35/00

(54) **DISPLAY DEVICE AND VEHICLE**

(30) Priority: 25.07.2022 CN 202210878820
(71) Applicant: Shenzhen Yinwang Intelligent Technologies Co., Ltd., Shenzhen, Guangdong 518129 (CN)
(72) Inventor: ZHAO, Han, Shenzhen, Guangdong 518129 (CN); ZHAO, Qing, Shenzhen, Guangdong 518129 (CN)
(74) Representative: Pfenning, Meinig & Partner mbB
(86) International application number: PCT/CN2023/075089
(87) International publication number: WO 2024/021563

(57) **Abstract**

A display apparatus (200, 1100) is provided, including an image source (210, 1110, 2110, 2120, 2130), a beam splitter (220, 2201, 2202, 2203, 1120, 11201, 11202, 11203), and a reflective element (230, 1130). The image source (210, 1110, 2110, 2120, 2130) is configured to emit first image light and second image light to the beam splitter (220, 2201, 2202, 2203, 1120, 11201, 11202, 11203). The beam splitter (220, 2201, 2202, 2203, 1120, 11201, 11202, 11203) has a semi-transparent and semi-reflective film (221, 2211, 2212, 1121, 11211, 11212), and is configured to: transmit the first image light to the reflective element (230, 1130), and reflect the second image light to the reflective element (230, 1130). The reflective element (230, 1130) is configured to: reflect the first image light to generate a first image, and reflect the second image light to a windshield (240) to generate a second image. The display apparatus (200, 1100) uses a combination of the single image source (210, 1110, 2110, 2120, 2130) and the beam splitter (220, 2201, 2202, 2203, 1120, 11201, 11202, 11203) to implement dual-image display, thereby avoiding an introduction of two image sources and reducing a volume of the display apparatus (200, 1100). A transportation means with the display apparatus (200, 1100) is further provided.

## Description

This application claims priority to Chinese Patent Application No. 202210878820.5, filed with the China National Intellectual Property Administration on July 25, 2022, and entitled "DISPLAY APPARATUS AND TRANSPORTATION MEANS", which is incorporated herein by reference in its entirety.

### TECHNICAL FIELD

This application relates to the image display field, and more specifically, to a display apparatus and a transportation means.

### BACKGROUND

Currently, head-up displays (head-up displays, HUDs) are widely used in vehicles. An independent display component is usually used to provide image input for a HUD, and another independent display component is used as an image source of a mechanical instrument or an image source of a liquid crystal instrument. Therefore, two image generation apparatuses need to be used in a vehicle to emit two paths of imaged light, to respectively implement two projections. As a result, an entire system has a disadvantage of occupying relatively large space in the vehicle, and is applicable to a limited vehicle model. How to reduce a volume of the HUD and implement an integrated design of an AR-HUD and a conventional instrument becomes an urgent problem to be resolved.

### SUMMARY

This application provides a display apparatus and a transportation means. The display apparatus provided in this application can be used in a HUD, to reduce a volume of the HUD and implement an integrated design of an AR-HUD and a conventional instrument.

According to a first aspect, an embodiment of this application provides a display apparatus. The apparatus includes an image source, a beam splitter, and a reflective element. The image source is configured to emit first image light and second image light to the beam splitter. The beam splitter is configured to: transmit the first image light to the reflective element, and reflect the second image light to the reflective element. The reflective element is configured to: reflect the first image light to generate a first image, and reflect the second image light to a windshield to generate a second image.

For example, when the display apparatus provided in this embodiment of this application is used in a HUD system, the first image generated by the display apparatus may be an instrument image, for example, a fuel level icon or a fault indication icon. The second image may be HUD display information, for example, navigation information or a current vehicle speed.

In the display apparatus provided in this application, dual-image display is implemented based on a combination of the single image source and the beam splitter, thereby avoiding an introduction of two image sources and reducing a volume of the display apparatus.

With reference to the first aspect, in some implementations of the first aspect, the beam splitter includes a first semi-transparent and semi-reflective film and a glass substrate. The first semi-transparent and semi-reflective film is attached to a first surface of the glass substrate. The first semi-transparent and semi-reflective film is configured to: transmit the first image light to the glass substrate, and reflect the second image light to the reflective element. The first image light is transmitted to the reflective element through the glass substrate.

With reference to the first aspect, in some implementations of the first aspect, the beam splitter further includes a second semi-transparent and semi-reflective film. The second semi-transparent and semi-reflective film is attached to a second surface of the glass substrate, and the second surface is opposite to the first surface. The second semi-transparent and semi-reflective film is configured to transmit, to the reflective element, the first image light from the glass substrate.

The second image light can be further prevented, by using two layers of semi-transparent and semi-reflective films, from entering a light path of the first image light, so that imaging quality is improved.

With reference to the first aspect, in some implementations of the first aspect, the reflective element is a curved mirror, the curved mirror includes a first region and a second region, the first region is configured to reflect the first image light, and the second region is configured to reflect the second image light.

Based on the foregoing solution, based on the single curved mirror, reflection performed on different image light is implemented by using different regions of the curved mirror, so that a quantity of elements in a light path can be reduced.

With reference to the first aspect, in some implementations of the first aspect, the reflective element includes a first curved mirror and a second curved mirror. The first curved mirror reflects the first image light. The second curved mirror reflects the second image light.

Based on the design of two curved mirrors, different curved mirrors reflect different image light, so that interference between light paths of different image light can be reduced, and the imaging quality can be ensured.

With reference to the first aspect, in some implementations of the first aspect, the reflective element is further configured to reflect the first image light to the beam splitter, and the first image light is imaged by using the beam splitter.

A light path of the first image light is changed based on re-reflection performed on the first image light by the reflective element, and the first light image is imaged in combination with the beam splitter in the system, to prevent from introducing more elements, so that objectives of using less space and reducing the volume are achieved.

With reference to the first aspect, in some implementations of the first aspect, the reflective element includes a first curved mirror and a second curved mirror. The first curved mirror is configured to reflect the first image light to the beam splitter. The second curved mirror is configured to reflect the second image light to the windshield.

With reference to the first aspect, in some implementations of the first aspect, the beam splitter includes a first semi-transparent and semi-reflective film, a glass substrate, and a first polarizing element. The first semi-transparent and semi-reflective film is attached to a first surface of the glass substrate. The first semi-transparent and semi-reflective film is configured to: transmit the first image light to the glass substrate, and reflect the second image light to the second curved mirror. The first image light is transmitted to the first polarizing element through the glass substrate, and polarization directions of the first image light and the second image light are perpendicular. The first polarizing element is configured to: convert, into first circularly polarized light, the first image light from the glass substrate, and convert, into first polarized light, second circularly polarized light from the first curved mirror, and rotation directions of the first circularly polarized light and the second circularly polarized light are different. The first semi-transparent and semi-reflective film is further configured to reflect the first polarized light. A polarization direction of the first polarized light and the polarization direction of the second image light are the same.

Based on the first polarizing element, a polarization status of the first image light reflected by the first curved mirror is changed to be the same as a polarization status of the second image light, and a transmission path of the first image light is changed by using a polarization characteristic and the reflection performed by the first semi-transparent and semi-reflective film, so that a loss of image light can be reduced.

With reference to the first aspect, in some implementations of the first aspect, the beam splitter includes a first semi-transparent and semi-reflective film, a glass substrate, a second semi-transparent and semi-reflective film, and a first polarizing element. The first semi-transparent and semi-reflective film is attached to a first surface of the glass substrate, the second semi-transparent and semi-reflective film is attached to a second surface of the glass substrate, and the second surface is opposite to the first surface. The first semi-transparent and semi-reflective film is configured to: transmit the first image light to the glass substrate, and reflect the second image light to the second curved mirror. The first image light is transmitted to the second semi-transparent and semi-reflective film through the glass substrate. The second semi-transparent and semi-reflective film is configured to transmit the first image light from the glass substrate. The first polarizing element is configured to: convert, into first circularly polarized light, the first image light from the second semi-transparent and semi-reflective film, and convert, into first polarized light, second circularly polarized light from the first curved mirror, and rotation directions of the first circularly polarized light and the second circularly polarized light are different. The second semi-transparent and semi-reflective film is further configured to reflect the first polarized light. Polarization directions of the first image light and the second image light are perpendicular, and a polarization direction of the first polarized light and the polarization direction of the second image light are the same.

The first polarized light is reflected at an upper layer of semi-transparent and semi-reflective film by using two layers of semi-transparent and semi-reflective films. There is no need to pass through the glass substrate again, which leads to an energy loss, so that imaging quality and imaging effect are improved.

With reference to the first aspect, in some implementations of the first aspect, the first polarizing element is a 1/4 wave plate.

Linearly polarized light in a first polarization direction (that is, the first image light) is converted into the circularly polarized light based on the 1/4 wave plate, and the circularly polarized light is converted into the first polarized light whose vibration direction is the same as that of the second image light, so that the first polarized light meets reflection of the semi-transparent and semi-reflective film, and is reflected on a surface of the second semi-transparent and semi-reflective film. In other words, a light path is changed by using a polarization status of image light. A structure is simple, and reliability is high.

With reference to the first aspect, in some implementations of the first aspect, the image source includes a second polarizing element and a third polarizing element. The second polarizing element is configured to convert, into circularly polarized light, some output light beams from the image source. The third polarizing element is configured to convert the circularly polarized light into the second image light. The polarization direction of the second image light and the polarization direction of the first image light are perpendicular.

A polarization status of the image light emitted by the image source is changed by combining the second polarizing element and the third polarizing element, so that a light energy loss is reduced, and the imaging quality can be ensured.

With reference to the first aspect, in some implementations of the first aspect, the second polarizing element is a 1/4 wave plate, and the third polarizing element is a 1/4 wave plate or a polarizer whose polarization direction is perpendicular to the polarization direction of the first image light.

With reference to the first aspect, in some implementations of the first aspect, the image source includes a second polarizing element. The second polarizing element is configured to convert, into the second image light, some output light beams from the image source.

A polarization status of the image light emitted by the image source is changed by using the second polarizing element, so that a quantity of elements can be further reduced and costs are reduced in addition to reducing a light energy loss and ensuring the imaging quality.

With reference to the first aspect, in some implementations of the first aspect, the second polarizing element is a 1/2 wave plate.

With reference to the first aspect, in some implementations of the first aspect, the first image light and the second image light that are emitted by the image source are polarized light, and the polarized light includes P light and S light.

With reference to the first aspect, in some implementations of the first aspect, the image source includes a liquid crystal display LCD image source and an organic light-emitting diode OLED image source.

With reference to the first aspect, in some implementations of the first aspect, the image source further includes a diffuser, the diffuser is configured to: generate the first image and the second image based on image light emitted by the image source, and emit the first image light and the second image light, and the image source includes liquid crystal on silicon LCOS, a digital micromirror device (DMD), and a micro-electromechanical system MEMS.

According to a second aspect, an embodiment of this application provides a display method. The method is performed by a display apparatus. The display apparatus includes an image source, a beam splitter, and a reflective element. The image source emits first image light and second image light to the beam splitter. The first image light is transmitted to the reflective element through the beam splitter, and a first image is generated after the first image light is reflected by the reflective element. The second image light is reflected to the reflective element by the beam splitter, and is reflected to a windshield by the reflective element. A second image is generated by using the windshield.

According to the display method disclosed in this application, two images are generated by using two paths of image light emitted by a single image source, so that a quantity of image sources can be reduced. Therefore, an objective of reducing a volume of the display apparatus is implemented.

With reference to the second aspect, in some implementations of the second aspect, the beam splitter includes a first semi-transparent and semi-reflective film and a glass substrate. The first semi-transparent and semi-reflective film is attached to a first surface of the glass substrate. The first image light is transmitted to the glass substrate through the first semi-transparent and semi-reflective film, and is transmitted to the reflective element through the glass substrate. The second image light is reflected to the reflective element through the first semi-transparent and semi-reflective film.

With reference to the second aspect, in some implementations of the second aspect, the beam splitter further includes a second semi-transparent and semi-reflective film. The second semi-transparent and semi-reflective film is attached to a second surface of the glass substrate, and the second surface is opposite to the first surface. The first image light from the glass substrate is transmitted to the reflective element through the second semi-transparent and semi-reflective film.

Based on two layers of semi-transparent and semi-reflective films, stray light interference caused when the second image light is emitted to a light path of the first image light can be avoided.

With reference to the second aspect, in some implementations of the second aspect, the reflective element is a curved mirror, the curved mirror includes a first region and a second region. The first region is configured to reflect the first image light, and the second region is configured to reflect the second image light.

Based on the single curved mirror, reflection performed on different image light is implemented by using different regions of the curved mirror, so that a quantity of elements can be reduced.

With reference to the second aspect, in some implementations of the second aspect, the reflective element includes a first curved mirror and a second curved mirror. The first curved mirror is configured to reflect the first image light. The second curved mirror is configured to reflect the second image light.

Based on the design of two curved mirrors, different curved mirrors reflect different image light, so that interference between different paths of image light can be reduced, and the imaging quality can be ensured.

With reference to the second aspect, in some implementations of the second aspect, the first image light is reflected to the beam splitter by using the reflective element, and is imaged by using the beam splitter.

A light path of the first image light is changed based on re-reflection performed on the first image light by the reflective element, and the first light image is imaged in combination with the beam splitter in the system, to make full use of elements in the system and prevent from introducing more elements, so that objectives of using less space and reducing the volume are achieved.

With reference to the second aspect, in some implementations of the second aspect, the reflective element includes a first curved mirror and a second curved mirror. The first image light is reflected to the beam splitter through the first curved mirror. The second image light is reflected to the windshield through the second curved mirror.

With reference to the second aspect, in some implementations of the second aspect, the beam splitter includes a first semi-transparent and semi-reflective film, a glass substrate, and a first polarizing element. The first semi-transparent and semi-reflective film is attached to a first surface of the glass substrate. The first image light is transmitted to the glass substrate through the first semi-transparent and semi-reflective film, is transmitted to the first polarizing element through the glass substrate at the same time, and is converted into first circularly polarized light by the first polarizing element. After that, the first circularly polarized light is transmitted to the first curved mirror, and is reflected to be second circularly polarized light through the first curved mirror. The second circularly polarized light is converted into first polarized light through the first polarizing element, is transmitted to the first semi-transparent and semi-reflective film, and is reflected through the first semi-transparent and semi-reflective film and the first image is generated. The second image light is reflected to the second curved mirror through the first semi-transparent and semi-reflective film. Polarization directions of the first image light and the second image light are perpendicular. Rotation directions of the first circularly polarized light and the second circularly polarized light are different. A polarization direction of the first polarized light and the polarization direction of the second image light are the same.

Based on the first polarizing element, a polarization status of the first image light reflected by the first curved mirror is changed to be the same as a polarization status of the second image light, so that the first semi-transparent and semi-reflective film can change a transmission direction of the first image light through reflection. In other words, a transmission path of a light beam is changed by using a polarization characteristic, so that a loss of image light can be reduced.

With reference to the second aspect, in some implementations of the second aspect, the beam splitter includes a first semi-transparent and semi-reflective film, a glass substrate, a second semi-transparent and semi-reflective film, and a first polarizing element. The first semi-transparent and semi-reflective film is attached to a first surface of the glass substrate, the second semi-transparent and semi-reflective film is attached to a second surface of the glass substrate, and the second surface is opposite to the first surface. The first image light is transmitted to the glass substrate through the first semi-transparent and semi-reflective film, is transmitted to the second semi-transparent and semi-reflective film through the glass substrate, is transmitted to the first polarizing element through the second semi-transparent and semi-reflective film at the same time, and is converted into first circularly polarized light by the first polarizing element. After that, the first circularly polarized light is transmitted to the first curved mirror, and is reflected and converted into second circularly polarized light to the first polarizing element by the first curved mirror. The second circularly polarized light is converted into first polarized light through the first polarizing element, is transmitted to the second semi-transparent and semi-reflective film, and is reflected by the second semi-transparent and semi-reflective film and is imaged. The second image light is reflected to the second curved mirror through the first semi-transparent and semi-reflective film. Polarization directions of the first image light and the second image light are perpendicular. Rotation directions of the first circularly polarized light and the second circularly polarized light are different. A polarization direction of the first polarized light and the polarization direction of the second image light are the same.

The first polarized light can be reflected by an upper layer of semi-transparent and semi-reflective film by using two layers of semi-transparent and semi-reflective films. There is no need to pass through the glass substrate again, which leads to an energy loss, so that imaging quality and imaging effect are improved.

With reference to the second aspect, in some implementations of the second aspect, the first polarizing element is a 1/4 wave plate.

Conversion of a polarization status of the first image light is implemented based on the 1/4 wave plate, so that the first polarized light meets reflection of the semi-transparent and semi-reflective film, and is reflected on a surface of the second semi-transparent and semi-reflective film. In other words, a light path is changed by using a polarization status of image light. A structure is simple, and reliability is high.

With reference to the second aspect, in some implementations of the second aspect, the image source includes a second polarizing element and a third polarizing element. The second polarizing element converts, into circularly polarized light, some output light beams from the image source. The third polarizing element converts the circularly polarized light into the second image light. The polarization direction of the second image light and the polarization direction of the first image light are perpendicular.

A polarization status of the image light emitted by the image source is changed by combining the second polarizing element and the third polarizing element, so that a light energy loss is reduced, and the imaging quality can be ensured.

With reference to the second aspect, in some implementations of the second aspect, the second polarizing element is a 1/4 wave plate, and the third polarizing element is a 1/4 wave plate or a polarizer whose polarization direction is perpendicular to the polarization direction of the first image light.

With reference to the second aspect, in some implementations of the second aspect, the image source includes a second polarizing element. The second polarizing element converts, into the second image light, some output light beams from the image source.

A polarization status of the image light emitted by the image source is changed by using the second polarizing element, so that a quantity of elements can be further reduced and costs are reduced in addition to reducing a light energy loss and ensuring the imaging quality.

With reference to the second aspect, in some implementations of the second aspect, the second polarizing element is a 1/2 wave plate.

With reference to the second aspect, in some implementations of the second aspect, the first image light and the second image light that are emitted by the image source are polarized light, and the polarized light includes P light and S light.

With reference to the second aspect, in some implementations of the second aspect, the image source includes a liquid crystal display LCD image source and an organic light-emitting diode OLED image source.

With reference to the second aspect, in some implementations of the second aspect, the image source further includes a diffuser, the diffuser is configured to: generate the first image and the second image based on image light emitted by the image source, and emit the first image light and the second image light, and the image source includes liquid crystal on silicon LCOS, a digital micromirror device (DMD), and a micro-electromechanical system MEMS.

According to a third aspect, an embodiment of this application provides a transportation means. The transportation means includes the display device according to any one of the first aspect or the possible implementations of the first aspect.

With reference to the third aspect, in some implementations of the third aspect, the display apparatus is installed at a position of a dashboard of the transportation means.

For example, the dashboard of the transportation means may be an operation console that is located at a driver side and that is under a windshield of the transportation means. The operation console may include an instrument display of a vehicle.

With reference to the third aspect, in some implementations of the third aspect, the transportation means further includes a windshield, the second image light emitted by the display apparatus is incident to the windshield, and the second image light is imaged by using the windshield.

For beneficial effects brought by the third aspect, refer to the descriptions of beneficial effects in the first aspect or the second aspect. Details are not described herein again.

### BRIEF DESCRIPTION OF DRAWINGS

FIG. 1 is a diagram of an application scenario of a display device according to an embodiment of this application;
FIG. 2 is a diagram of a structure of a display device 200 according to an embodiment of this application;
FIG. 3 is a diagram of a structure of a first beam splitter 2201 according to an embodiment of this application;
FIG. 4 is a diagram of a structure of a second beam splitter 2202 according to an embodiment of this application;
FIG. 5 is a diagram of a structure of a third beam splitter 2203 according to an embodiment of this application;
FIG. 6 is a diagram of another structure of a display device 200 according to an embodiment of this application;
FIG. 7 is a diagram of a possible structure of a first image source 2110 according to an embodiment of this application;
FIG. 8 shows a possible structure of an image generation unit 2101 according to an embodiment of this application;
FIG. 9 is a diagram of a possible structure of a second image source 2120 according to an embodiment of this application;
FIG. 10 is a diagram of a possible structure of a third image source 2130 according to an embodiment of this application;
FIG. 11 is a diagram of a structure of a display device 1100 according to an embodiment of this application;
FIG. 12 is a diagram of a structure of a first beam splitter 11201 according to an embodiment of this application;
FIG. 13 is a diagram of a structure of a second beam splitter 11202 according to an embodiment of this application;
FIG. 14 is a diagram of a structure of a third beam splitter 11203 according to an embodiment of this application;
FIG. 15 is a diagram of a structure of a HUD system according to an embodiment of this application;
FIG. 16 is a schematic of a circuit of a display device according to an embodiment of this application; and
FIG. 17 is a diagram of a functional framework of a transportation means according to an embodiment of this application.

### DESCRIPTION OF EMBODIMENTS

The following describes technical solutions of this application with reference to the accompanying drawings.

For ease of understanding of embodiments of this application, the following descriptions are provided.
1. In the following text descriptions or accompanying drawings in embodiments of this application, terms such as "first" and "second" and various numbers are merely used for differentiation for ease of description, and do not need to be used to describe a specific order or sequence, but are not intended to limit the scope of embodiments of this application. For example, different film layers or polarizing elements are distinguished.
2. In the following embodiments of this application, terms such as "include", "have", and any other variants thereof mean to cover non-exclusive inclusion, for example, a process, method, system, product, or device that includes a series of steps or units is not necessarily limited to those steps or units that are expressly listed, but may include another inherent step or unit not expressly listed or inherent to such a process, method, product, or device.
3. In embodiments of this application, terms such as "example" and "for example" represent giving an example, an illustration, or a description. An embodiment or a design scheme described as an "example" or "for example" should not be explained as being more preferred or having more advantages than another embodiment or design scheme. Use of the terms such as "example" and "for example" is intended to present a related concept in a specific manner for ease of understanding.
4. In embodiments of this application, image light is light carrying an image (or image information), and is used to generate an image.
5. In embodiments of this application, a surface shape of a curved mirror is not limited, for example, may be a freeform curved mirror.
6. In embodiments of this application, an optical element may also be referred to as an optical device, an optical component, or the like.
7. In the accompanying drawings of this application, the accompanying drawings are merely examples and are not drawn strictly according to a scale. Specifically, a shape of the curved mirror shown in the accompanying drawings is shown in an embodiment manner. In addition, for ease of description, an emergent included angle between first image light and second image light is slightly exaggerated.
8. A wave plate in embodiments of this application, also referred to as a phase delay plate, is fabricated by using a birefringent crystal with a specific thickness, for example, a quartz crystal. The wave plate can generate a relative phase delay between two polarization components that are of polarized light and whose vibration directions are perpendicular to each other, so that polarization characteristic of light is changed. The wave plate mainly includes a quarter-wave plate (quarter-wave plate, QWP) and a half-wave plate (half-wave plate, HWP). The QWP is also referred to as a 1/4 wave plate. When light is incident and passes through the QWP from a normal direction, a phase delay of an odd multiple of π/2 is generated between ordinary light (o light) and extraordinary light (e light). When linearly polarized light is perpendicularly incident to the 1/4 wave plate, and polarization of the light makes an angle of θ with an optical axis plane of the wave plate, linearly polarized light that is emergent becomes elliptically polarized light. Particularly, when θ = ±45°, the emergent light is circularly polarized light. In this case, a fast axis of the wave plate makes an angle of 45° with an incident polarization direction, and the circularly polarized light is output. The HWP is also referred to as a 1/2 wave plate. When light is incident and passes through the QWP from a normal direction, a phase delay of an odd multiple of π is generated between ordinary light (o light) and extraordinary light (e light). Linearly polarized light that passes through the 1/2 wave plate is still the linearly polarized light. However, a vibration plane of the linearly polarized light that is emergent is rotated by 2θ from a vibration plane of the linearly polarized light that is incident. If θ = 45°, the vibration plane of the emergent light and the vibration plane of the original incident light are perpendicular. In other words, when θ = 45°, the 1/2 wave plate can enable a polarization status to rotate 90°.
9. The wave plate, for example, the 1/2 wave plate and the 1/4 wave plate, in this application may be replaced with a prism. For example, a phase retarder formed by a rhombic prism may implement, after a precise rhombic prism design, a phase delay function similar to that of the wave plate. In descriptions of the following embodiments of this application, a wave plate is used as an example for description.

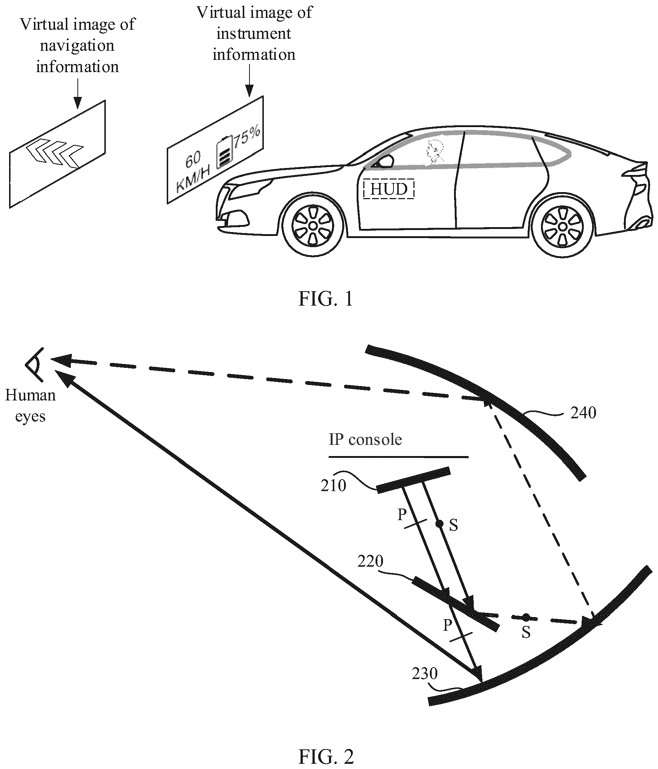

FIG. 1 is a diagram of an application scenario of a HUD device according to an embodiment of this application. As shown in FIG. 1, the HUD device is disposed on a vehicle. The HUD device is configured to project vehicle status information, external object indication information, navigation information, and the like into a field of view of a driver through a windshield glass of the vehicle. The status information includes but is not limited to information such as a driving speed, a driving mileage, a fuel amount, a water temperature, a vehicle light status, and the like. The external object indication information includes but is not limited to a safe inter-vehicle distance, a surrounding obstacle, a vehicle reversing image, and the like. The navigation information includes but is not limited to a direction arrow, a distance, a driving time, and the like.

Virtual images corresponding to the navigation information and the external object indication information may be superimposed on a real environment outside the vehicle, so that the driver can obtain visual effect of augmented reality. For example, the virtual images may be used on an augmented reality (augmented reality, AR) navigation, adaptive cruise, lane departure warning, or the like. The virtual image corresponding to the navigation information may be combined with a real scene. Therefore, the HUD device usually works with an advanced driving assistant system (advanced driving assistant system, ADAS) of the vehicle. To avoid interfering with a road condition, a distance between human eyes and a virtual image corresponding to instrument information usually approximately ranges from 2 meters to 3 meters. To better fuse a real road surface with the virtual image corresponding to the navigation information, a distance between the human eyes and the virtual image corresponding to the navigation information usually approximately ranges from 7 meters to 15 meters. A location of the virtual image of the navigation information is referred to as a far focal plane. A plane at which the virtual image of the instrument information is located is referred to as a near focal plane.

However, to implement dual-image display, an AR-HUD usually needs to use two image generation apparatuses to emit two paths of imaged light, to respectively implement projections of two different distances. An entire system has a relatively large volume, has a disadvantage of occupying relatively large space in the vehicle, and is applicable to a limited vehicle model. Therefore, the display apparatus provided in this application can implement a small-sized HUD system, and can avoid structural interference of various vehicle models, so that a requirement of most vehicle models for a small-sized HUD system can be met, and a relatively large field of view (field of view, FOV) can be implemented at relatively low costs.

FIG. 2 is a diagram of a structure of a display apparatus 200 according to an embodiment of this application. As shown in FIG. 2, the display apparatus 200 includes an image source 210, a beam splitter 220, and a reflective element 230. Specifically, the image source 210 is configured to: generate first image light including first image information and second image light including second image information, and emit the first image light and the second image light to the beam splitter 220. The beam splitter 220 is configured to: transmit the first image light to the reflective element 230, and reflect the second image light to the reflective element 230. The reflective element 230 is configured to: reflect the first image light to human eyes, and reflect the second image light to a windshield 240. A first image is generated based on the first image light by using the reflective element 230. A second image is generated based on the second image light by using the windshield 240.

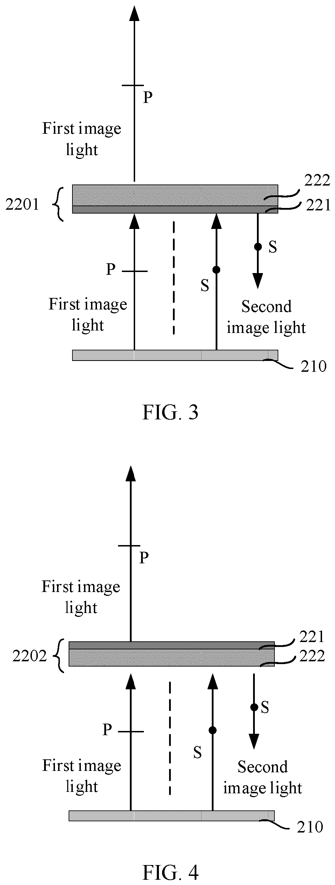

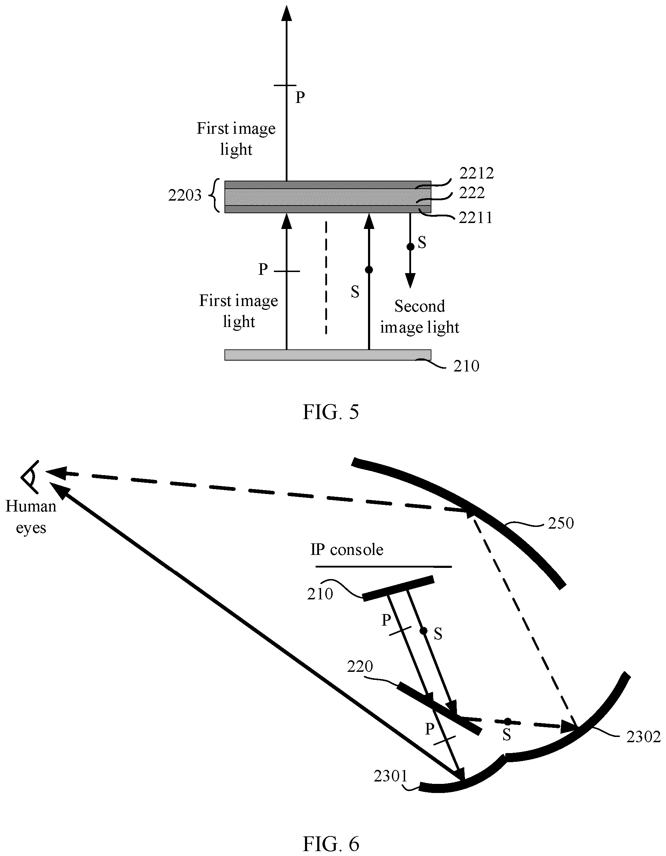

First, possible structures (including 2201, 2202, and 2203) of the beam splitter 220 in the display apparatus 200 are separately described. The first possible structure 2201 of the beam splitter 220 is shown in FIG. 3. The second possible structure 2202 of the second beam splitter 220 is shown in FIG. 4. The third possible structure 2203 of the third beam splitter 220 is shown in FIG. 5.

In a first feasible manner, the beam splitter 2201 includes a first semi-transparent and semi-reflective film 221 and a glass substrate 222. The first semi-transparent and semi-reflective film 221 is attached to a first surface of the glass substrate 222 (for example, a surface, shown in FIG. 3, that is of the glass substrate 222 and that is close to the image source 210). Specifically, the first semi-transparent and semi-reflective film 221 is configured to: transmit the first image light to the glass substrate 222, and reflect the second image light to the reflective element 230. The glass substrate 222 transmits the first image light to the reflective element 230.

In this embodiment of this application, the first image light and the second image light are linearly polarized light with perpendicular polarization directions. For example, the first image light may be P light, and the second image light is S light. Alternatively, the first image light is S light, and the second image light is P light. The first semi-transparent and semi-reflective film 221 may be a reflective polarizing (reflect polarization, RP) film with a polarization characteristic. For example, when the first image light may be the P light and the second image light is the S light, the first semi-transparent and semi-reflective film 221 is an RP film that transmits P light and reflects S light. When the first image light is the S light and the second image light is the P light, the first semi-transparent and semi-reflective film 221 is an RP film that transmits S light and reflects P light.

In a second feasible manner, the first semi-transparent and semi-reflective film 221 may be attached to a second surface of the glass substrate 222, that is, a surface, shown in FIG. 4, that is of the glass substrate 222 and that is away from the image source 210. Specifically, the first image light emitted by the image source 210 is transmitted through the glass substrate 222 and transmitted through the first semi-transparent and semi-reflective film 221, and then reaches the reflective element 230. The second image light emitted by the image source 210 is transmitted through the glass substrate 222, and then is reflected by a surface of the first semi-transparent and semi-reflective film 221 to the reflective element 230.

In a third feasible manner, the structure of the beam splitter 2203 may be shown in FIG. 5. The beam splitter 2203 includes a first semi-transparent and semi-reflective film 2211, a glass substrate 222, and a second semi-transparent and semi-reflective film 2212. The first semi-transparent and semi-reflective film 2211 is attached to a first surface of the glass substrate 222, the second semi-transparent and semi-reflective film 2212 is attached to a second surface of the glass substrate 222, and the first surface and the second surface are opposite surfaces of the glass substrate 222. It should be understood that the beam splitter 2203 shown in FIG. 5 may be considered as a combination of the beam splitter 220 shown in FIG. 3 and the beam splitter 220 shown in FIG. 4.

It should be understood that, in the beam splitter 2203 shown in FIG. 5, the first semi-transparent and semi-reflective film 2211 is an RP film that mainly reflects the second image light. In addition, polarization characteristics of the first semi-transparent and semi-reflective film 2211 and the second semi-transparent and semi-reflective film 2212 should be consistent. In other words, when the first semi-transparent and semi-reflective film 2211 is an RP film that transmits P light and reflects S light, the second semi-transparent and semi-reflective film 2212 is also an RP film that transmits P light and reflects S light.

The following describes the reflective element 230 of the apparatus 200.

In a possible implementation, the reflective element 230 is a curved mirror, and a surface shape of the curved mirror may be a freeform curved mirror. Specifically, the curved mirror may include a first region and a second region. The first region is configured to reflect the first image light, and the second region is configured to reflect the second image light. In some designs, the first region and the second region have different curvatures, and are configured to reflect corresponding image light to different directions, so that the first image and the second image that are respectively generated based on the first image light and the second image light meet a display requirement.

In a possible implementation, as shown in FIG. 6, the reflective element 230 includes a first curved mirror 2301 and a second curved mirror 2302. The first image light is transmitted through the beam splitter 220 and then reaches a surface of the first curved mirror 2301, and is reflected by the surface of the first curved mirror 2301 to human eyes. The second image light is reflected by a surface of the beam splitter 220 to the second curved mirror 2302. The second curved mirror 2302 reflects the second image light to the windshield 240.

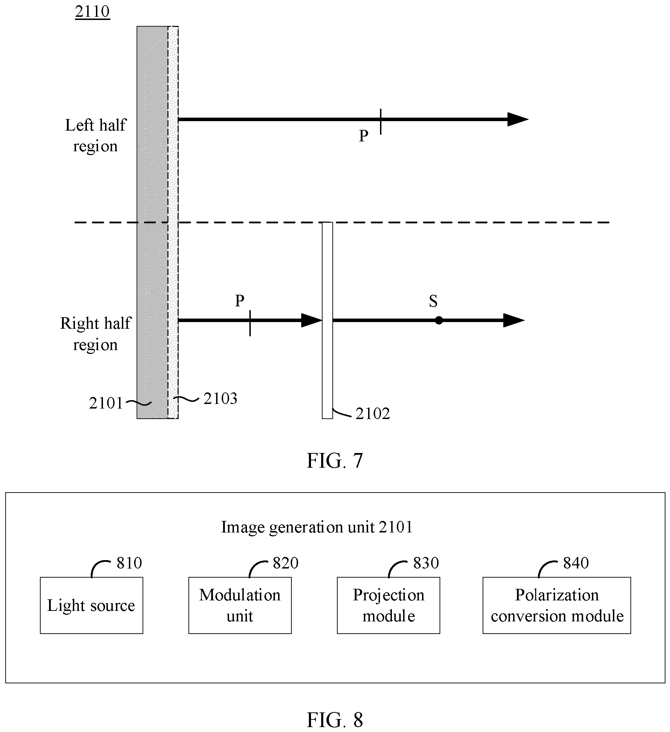

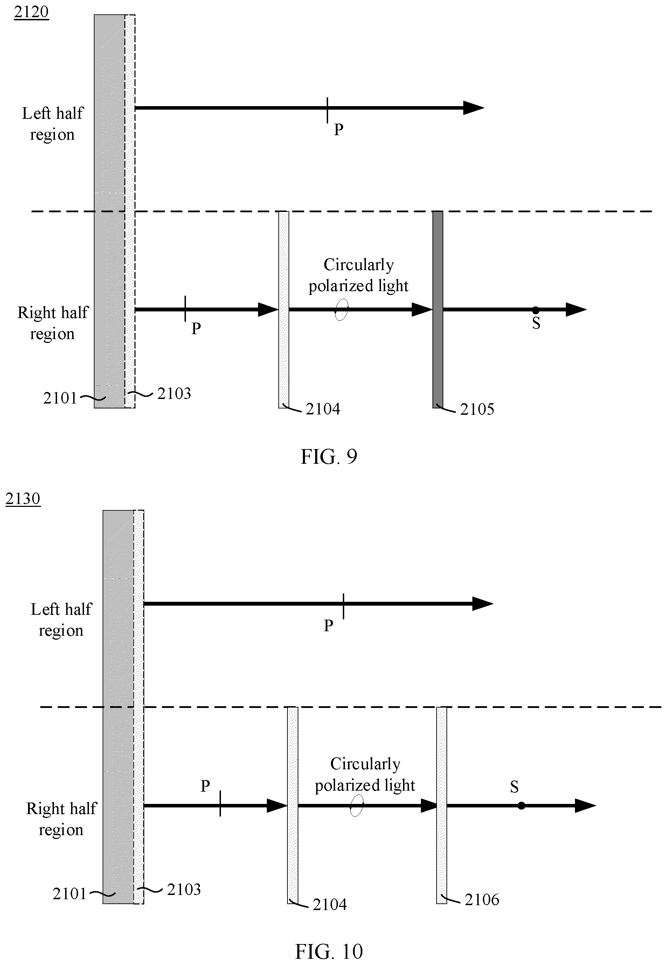

The following separately describes possible structures (including 2110, 2120, and 2130) of the image source 210 of the apparatus 200. The first possible structure 2110 of the image source 210 is shown in FIG. 7. The second possible structure 2120 of the image source 210 is shown in FIG. 9. The third possible structure 2230 of the image source 210 is shown in FIG. 10.

In a first possible implementation, FIG. 7 is a diagram of a possible structure of a first image source 2110 according to an embodiment of this application. Specifically, as shown in FIG. 7, the image source 2110 includes an image generation unit 2101 and a second polarizing element 2102. The image generation unit 2101 is configured to emit image light. The image light includes the first image light and the second image light. The second polarizing element 2102 is configured to change, to a polarization direction of the second image light, a polarization direction of a part of the image light emitted by the image generation unit 2101.

Further, the image generation unit 2101 may be shown in FIG. 8. Specifically, the image generation unit 2101 includes a light source 810, a modulation unit 820, a projection module 830, and a polarization conversion module 840. The light source 810 is configured to provide a light beam carrying image data. The modulation unit 820 is configured to modulate, based on the image data, the light beam emitted by the light source, so that light output by the modulation unit 820 carries the image data, that is, the light output by the modulation unit 820 is the image light. The projection module 830 is configured to project the image light carrying the image data. The polarization conversion module 840 is configured to change a polarization status of the image light, so that image light emitted by the image generation unit 2101 is image light in a specific polarization direction. For example, the image light emitted by the image generation unit 2101 is image light polarized in a P direction.

Specifically, when the image light emitted by the image generation unit 2101 is P light, the second polarizing element 2102 is a 1/2 wave plate, and is configured to convert P light into S light. When the image light emitted by the image generation unit 2101 is S light, the second polarizing element 2102 is a 1/2 wave plate, and is configured to convert S light into P light.

It should be understood that, in the descriptions and the figures of this embodiment of this application, the image generation unit 2101 is divided into a left half region and a right half region. However, this application is not limited thereto. In other words, the first image carried by the first image light and the second image carried by the second image are not evenly distributed strictly based on a left side and a right side of a screen. In other words, this application distinguishes between only the first image and the second image, and does not limit a quantity of images included in the first image or the second image. For example, when the first image is vehicle instrument cluster information, the first image may include a vehicle speed image, a fuel level image, and the like. The second image is a navigation image in a HUD image, for example, an image such as travel time, a distance, or a direction arrow.

In addition, in this embodiment of this application, the modulation unit 820 may be a liquid crystal on silicon (Liquid Crystal On Silicon, LCOS) display, an organic light-emitting diode (Organic Light-Emitting Diode, OLED) display, a liquid crystal display (Liquid Crystal Display, LCD), a digital micromirror device (digital micromirror device, DMD) display, a micro-electromechanical system (Micro-Electro-Mechanical Systems, MEMS) display, or the like.

When the image source 2110 performs imaging by using a point light source (for example, when the modulation unit 820 is the LCOS, the DMD, or the MEMS in the foregoing example), the image source 2110 further includes a diffuser 2103. The diffuser 2103 is configured to generate the first image and the second image on the diffuser 2103 based on image light emitted by the image source.

In a second possible implementation, FIG. 9 shows a possible structure of a second image source 2120 according to an embodiment of this application. Specifically, as shown in FIG. 9, the image source 2120 includes an image generation unit 2101, a second polarizing element 2104, and a third polarizing element 2105. The second polarizing element 2104 is configured to convert polarized light emitted by the image generation unit 2101 into circularly polarized light. The third polarizing element 2105 is configured to convert the circularly polarized light into a polarization direction of the second image light.

Specifically, when the image light emitted by the image generation unit 2101 is the P light, the second polarizing element 2104 is a 1/4 wave plate, and is configured to convert the P light into the circularly polarized light. The third polarizing element 2105 is a polarizer (also referred to as a polarizer) in an S direction, and is configured to convert the circularly polarized light into the S light. When the image light emitted by the image generation unit 2101 is the S light, the second polarizing element 2104 is the 1/4 wave plate, and is configured to convert the S light into the circularly polarized light. The third polarizing element 2105 is a polarizer (also referred to as a polarizer) in a P direction, and is configured to convert the circularly polarized light into the P light.

It should be understood that a diffuser 2103 may also exist in the image source 2120 described in FIG. 9. For specific descriptions, refer to FIG. 8. Details are not described herein again.

In a third possible implementation, FIG. 10 shows a possible structure of a third image source 2130 according to an embodiment of this application. Specifically, as shown in FIG. 10, the image source 2130 includes an image generation unit 2101, a second polarizing element 2104, and a third polarizing element 2106. The third polarizing element 2106 is configured to convert, into linearly polarized light whose polarization direction is the same as that of the second image light, circularly polarized light generated by the second polarizing element 2104. The third polarizing element 2106 is a 1/4 wave plate. For the image generation unit 2101 and the second polarizing element 2104, refer to related descriptions in FIG. 8 or FIG. 9. Details are not described herein again.

It should be noted that, in the image source 2130 shown in FIG. 10, a direction of a fast axis of the second polarizing element 2104 is parallel to a direction of a fast axis of the third polarizing element 2106. Similarly, a diffuser 2103 may also exist in the image source 2130 described in FIG. 10. For specific descriptions, refer to FIG. 8. Details are not described herein again.

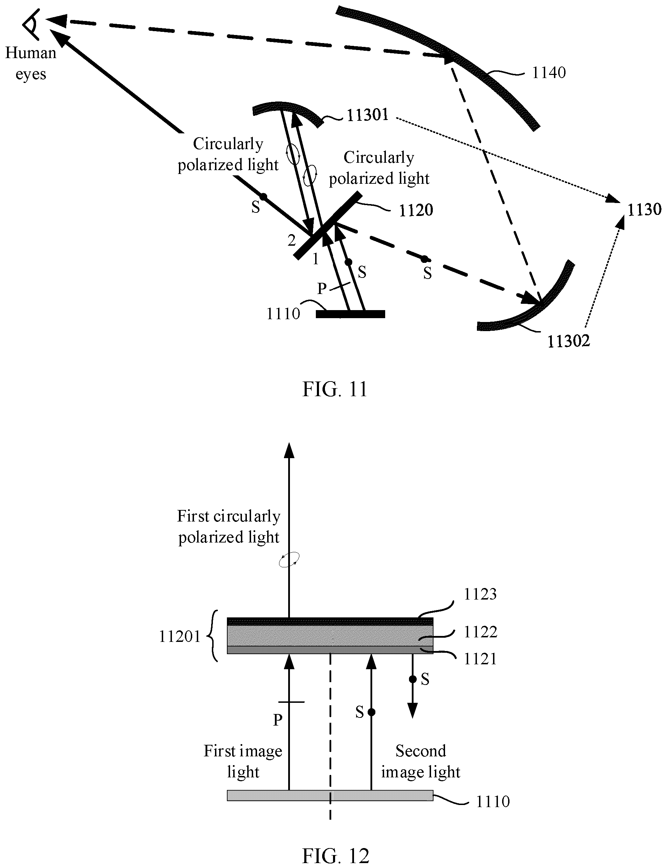

FIG. 11 is a diagram of a structure of a display apparatus 1100 according to an embodiment of this application. As shown in FIG. 11, the display apparatus 1100 includes an image source 1110, a beam splitter 1120, a first curved mirror 11301, and a second curved mirror 11302. The first curved mirror 11301 and the second curved mirror 11302 are reflective elements 1130. The beam splitter 1120 is configured to: transmit first image light to the first curved mirror 11301, receive the first image light reflected by the first curved mirror 11301, reflect the first image light to human eyes, and reflect second image light to the second curved mirror 11302. The first curved mirror 11301 is configured to reflect, to the beam splitter 1120, the first image light from the beam splitter 1120. The second curved mirror 11302 is configured to reflect, to a windshield 1140, the second image light from the beam splitter 1120. A first image is generated based on the first image light by using the beam splitter 1120. A second image is generated based on the second image light by using the windshield 1140.

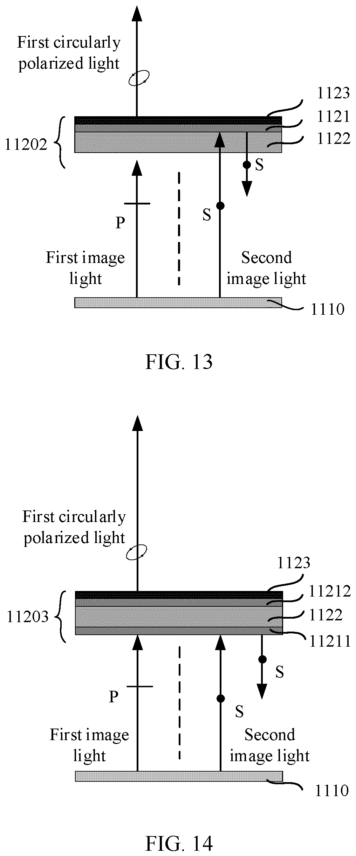

First, possible structures (including 11201, 11202, and 11203) of the beam splitter 1120 in the display apparatus 1100 are separately described. The first possible structure 11201 of an image source 1120 is shown in FIG. 12. The second possible structure 11202 of the image source 1120 is shown in FIG. 13. The third possible structure 11203 of the image source 1120 is shown in FIG. 14.

In a first feasible manner, a beam splitter 11201 includes a first semi-transparent and semi-reflective film 1121, a glass substrate 1122, and a first polarizing element 1123. The first semi-transparent and semi-reflective film 1121 is attached to a first surface of the glass substrate 1122 (for example, a surface, as shown in FIG. 12, that is of the glass substrate 1122 and that is close to a surface of the image source 1110). Specifically, the first semi-transparent and semi-reflective film 1121 is configured to: transmit the first image light to the glass substrate 1122, and reflect the second image light to the second curved mirror 11302. After the first image light is transmitted to the first polarizing element 1123 through the glass substrate 1122, the first polarizing element 1123 converts the first image light into first circularly polarized light, converts, into first polarized light, second circularly polarized light reflected by the first curved mirror 11301, and emits the first polarized light to the first semi-transparent and semi-reflective film 1121. The first semi-transparent and semi-reflective film 1121 reflects the first polarized light to human eyes.

Specifically, when the first image light is P light and the second image light is S light, the first semi-transparent and semi-reflective film 1121 is an RP film that transmits P light and reflects S light, and the first polarizing element 1123 is a 1/4 wave plate. In this case, the first semi-transparent and semi-reflective film 1121 transmits the P light emitted from the image source 1110, and reflects, to the second curved mirror 11302, the S light emitted from the image source 1110. The S light is reflected to the windshield through the second curved mirror 11302, and is imaged by using the windshield. After the P light transmitted from the first semi-transparent and semi-reflective film 1121 is transmitted through the glass substrate, the P light reaches a surface of the first polarizing element 1123. When an included angle between a fast axis of a 1/4 wave plate and a vibration direction of the P light is +45°, first circularly polarized light that is output is left-handed circularly polarized light. When an included angle between a fast axis of a 1/4 wave plate and a vibration direction of the P light is -45°, first circularly polarized light that is output is righthanded circularly polarized light. The first circularly polarized light is normally incident to the first curved mirror 11301. After the first circularly polarized light is reflected by the first curved mirror 11301, the second circularly polarized light is emitted to the beam splitter 11201. In this case, a rotation direction of the second circularly polarized light reflected through the first curved mirror 11301 is opposite to a rotation direction of the first circularly polarized light. After the second circularly polarized light is incident to a surface of the 1/4 wave plate, converted into the S light, and transmitted through the glass substrate 1122, the S light is reflected by the first semi-transparent and semi-reflective film 1121 to human eyes.

It should be understood that, in the foregoing process, only an example in which the first image light is the P light and the second image light is the S light is used. In this embodiment of this application, polarization directions of the first image light and the second image light are perpendicular. In other words, the first image light may alternatively be S light, and the second image light is P light. In this case, the first semi-transparent and semi-reflective film 1121 is an RP film that transmits S light and reflects P light.

In a second feasible manner, the structure of a beam splitter 11202 may be shown in FIG. 13. In FIG. 13, a first semi-transparent and semi-reflective film 1121 is attached to a second surface of a glass substrate 1122 (for example, a surface, as shown in FIG. 13, that is of the glass substrate 1122 and that is away from the image source 1110). In FIG. 12 and FIG. 13, the first surface and the second surface are two opposite surfaces on which the glass substrate 1122 transmits the first image light. Specifically, in FIG. 13, the first semi-transparent and semi-reflective film 1121 transmits, to a first polarizing element 1123, the first image light transmitted by the glass substrate 1122, and reflects, to the second curved mirror 11302, the second image light transmitted by the glass substrate 1122. The first polarizing element 1123 converts the first image light into first circularly polarized light, for example, left-handed circularly polarized light or righthanded circularly polarized light, and emits the first circularly polarized light to the first curved mirror 11301. After receiving the first circularly polarized light, the first curved mirror 11301 generates, through reflection, second circularly polarized light whose rotation direction is opposite to that of the first circularly polarized light, and projects the second circularly polarized light onto the first polarizing element 1123. The first polarizing element 1123 generates first polarized light based on the second circularly polarized light, and emits the first polarized light to a surface of the first semi-transparent and semi-reflective film 1121. The first polarized light is reflected to human eyes through the first semi-transparent and semi-reflective film 1121. It should be understood that the first polarized light may alternatively be reflected to a detection apparatus, a camera, or the like.

Specifically, when the first image light is P light and the second image light is S light, the first semi-transparent and semi-reflective film 221 is an RP film that transmits P light and reflects S light. When the first polarizing element 223 is a 1/4 wave plate, the first polarized light is linearly polarized light that vibrates in an S direction. When the first image light is the S light and the second image light is the P light, the first semi-transparent and semi-reflective film 221 is an RP film that transmits S light and reflects P light. In this case, the first polarized light is linearly polarized light that vibrates in a P direction.

In a third feasible manner, the structure of a beam splitter 11203 may be shown in FIG. 14. The beam splitter 11203 shown in FIG. 14 may be considered as a combination of FIG. 12 and FIG. 13. In other words, an upper surface and a lower surface of a glass substrate 1122 are each attached to or plated with a semi-transparent and semi-reflective film, for example, a first semi-transparent and semi-reflective film 11211 and a second semi-transparent and semi-reflective film 11212 as shown in FIG. 14. It should be understood that, when the semi-transparent and semi-reflective film exists on each of the upper surface and the lower surface of the glass substrate 1122, theoretically, the second image light emitted by the image source 1110 is reflected by the first semi-transparent and semi-reflective film 11211, and does not reach the second semi-transparent and semi-reflective film 11212. Similarly, first polarized light generated by a first polarizing element 1123 is reflected by the second semi-transparent and semi-reflective film 11212, and does not reach the first semi-transparent and semi-reflective film 11211. In addition, polarization characteristics of the first semi-transparent and semi-reflective film 11211 and the second semi-transparent and semi-reflective film 11212 should be consistent.

A design of two layers of semi-transparent and semi-reflective films can further prevent the second image light from entering a light path of the first image light. In addition, the first polarized light that is generated can be directly reflected at the first semi-transparent and semi-reflective film. In this way, imaging quality is improved, and an energy loss of the image light is reduced.

It should be understood that, in the display apparatus 1100, for descriptions of the image source 1110, refer to the foregoing descriptions of the image source 210. Details are not described herein again. In addition, surface shapes of the first curved mirror 11301 and the second curved mirror 11302 are not specified, and may be a freeform curved mirror.

In conclusion, based on the display apparatus provided in this application, when the display apparatus is used in a HUD device, effect of dual display of physical instrument information and a HUD image is implemented through one image source, so that a small-sized HUD system can be implemented, and structural interference of various vehicle models can be avoided.

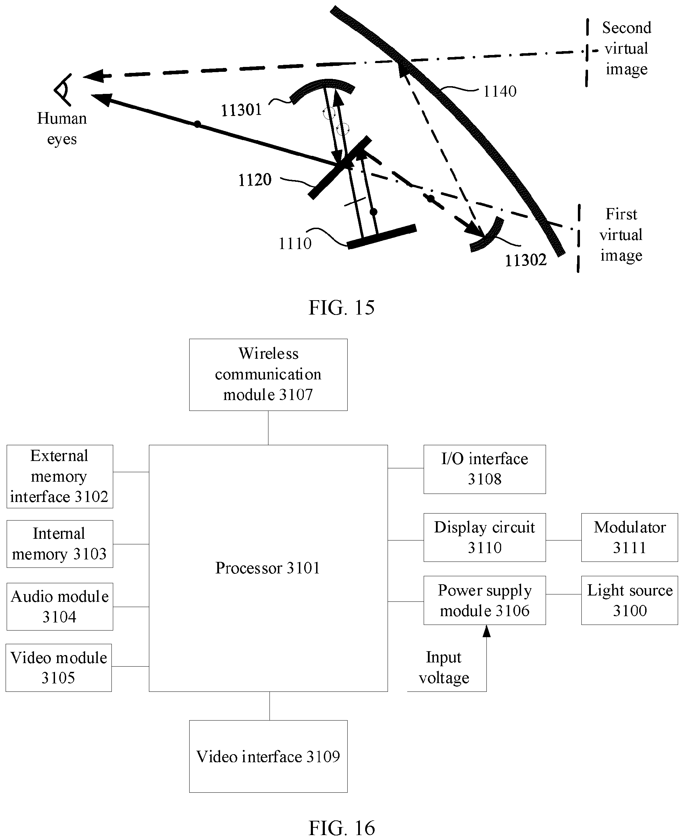

The foregoing separately describes, with reference to FIG. 2 and FIG. 11, possible cases of the display apparatus provided in embodiments of this application. The following briefly describes, with reference to FIG. 15, an embodiment in which the display apparatus provided in embodiments of this application is used in an overall system in a HUD. FIG. 15 is a diagram of an overall system in a HUD in which the display apparatus in FIG. 11 is used. A focal plane of a first virtual image may be a near focal plane, and a focal plane of a second virtual image may be a far focal plane. In this case, the small-sized display apparatus provided in this application can implement a dual-focal image. Alternatively, the focal plane of the first virtual image and the focal plane of the second image are located on a same plane.

For example, when the display apparatus is used in the HUD system, image information included in first image light may be image information including an instrument cluster, for example, a fuel level icon or a fault indication icon. Image information included in second image light may be HUD display information, for example, navigation information or a current vehicle speed. Therefore, the apparatus may be installed at a location of an instrument cluster of a vehicle, for example, may be installed at a location of an instrument panel (instrument panel, IP) that is of the vehicle and that is currently located at a driver side, to replace the physical instrument cluster. When the focal plane of the first virtual image corresponding to the first image light and the focal plane of the second virtual image corresponding to the second image light are a same focal plane, for a driver, quick focusing can be performed when eyes switch between the two virtual images, so that driver safety is ensured. In addition, the instrument image and the virtual image of a HUD image are both located far away, for example, located at a location greater than 2 meters. This helps the driver to keep looking far away.

In addition, the descriptions of the system embodiment and the descriptions of the apparatus embodiment may correspond to each other. For the descriptions of the display apparatus 200, reference may also be made to the descriptions of FIG. 15. Therefore, for a part that is not described, reference may be made to the foregoing apparatus embodiment.

FIG. 16 is a schematic of a circuit of a display apparatus according to an embodiment of this application. As shown in FIG. 16, the circuit in the display apparatus mainly includes a main processor (host CPU) 3101, an external memory interface 3102, an internal memory 3103, an audio module 3104, a video module 3105, a power supply module 3106, a wireless communication module 3107, an I/O interface 3108, a video interface 3109, a display circuit 3110, a modulator 3111, and the like. The main processor 3101 may be connected to a surrounding element, for example, the external memory interface 3102, the internal memory 3103, the audio module 3104, the video module 3105, the power supply module 3106, the wireless communication module 3107, the I/O interface 3108, the video interface 3109, or the display circuit 3110 through a bus. The main processor 3101 may be referred to as a front-end processor.

In addition, the schematic of the circuit in this embodiment of this application does not constitute a specific limitation on the display apparatus. In some other embodiments of this application, the display apparatus may include more or fewer components than components shown in the figure, some components may be combined, some components may be split, or different component arrangements may be used. The components shown in the figure may be implemented in hardware, software, or a combination of software and hardware.

The main processor 3101 includes one or more processing units. For example, the main processor 3101 may include an application processor (Application Processor, AP), a modem processor, a graphics processing unit (Graphics Processing Unit, GPU), an image signal processor (Image Signal Processor, ISP), a controller, a video codec, a digital signal processor (Digital Signal Processor, DSP), a baseband processor, and/or a neural-network processing unit (Neural-Network Processing Unit, NPU). Different processing units may be independent components, or may be integrated into one or more processors.

A memory may be further disposed in the main processor 3101, and is configured to store instructions and data. In some embodiments, the memory in the main processor 3101 is a cache. The memory may store instructions or data that have/has just been used or are/is cyclically used by the main processor 3101. If the main processor 3101 needs to use the instructions or the data again, the instructions or the data may be directly invoked from the memory. This avoids repeated access, reduces waiting time of the main processor 3101, and therefore improves system efficiency.

In some embodiments, the display apparatus may further include a plurality of input/output (Input/Output, I/O) interfaces 3108 connected to the main processor 3101. The interface 3108 may include an inter-integrated circuit (Inter-Integrated Circuit, I2C) interface, an inter-integrated circuit sound (Inter-Integrated Circuit Sound, I2S) interface, a pulse code modulation (Pulse Code Modulation, PCM) interface, a universal asynchronous receiver/transmitter (Universal Asynchronous Receiver/Transmitter, UART) interface, a mobile industry processor interface (Mobile Industry Processor Interface, MIPI), a general-purpose input/output (General-Purpose Input/Output, GPIO) interface, a subscriber identity module (Subscriber Identity Module, SIM) interface, a universal serial bus (Universal Serial Bus, USB) interface, a controller area network (Controller Area Network, CAN) interface, and/or the like. The I/O interface 3108 may be connected to a device such as a mouse, a touchpad, a keyboard, a camera, a speaker/loudspeaker, or a microphone, or may be connected to a physical button (for example, a volume button, a brightness adjustment button, or a power-on/off button) on the display apparatus.

The external memory interface 3102 may be configured to connect to an external storage card, for example, a micro SD card, to extend a storage capability of the display apparatus. The external storage card communicates with the main processor 3101 through the external memory interface 3102, to implement a data storage function.

The internal memory 3103 may be configured to store computer-executable program code. The executable program code includes instructions. The internal memory 3103 may include a program storage region and a data storage region. The program storage region may store an operating system, an application required by at least one function (such as a call function or a time setting function), and the like. The data storage region may store data (such as a phone book or world time) created in a process of using the display apparatus and the like. In addition, the internal memory 3103 may include a high-speed random access memory, and may further include a non-volatile memory, for example, at least one magnetic disk storage device, a flash memory device, and a universal flash storage (Universal Flash Storage, UFS). The main processor 3101 executes various functional applications and data processing of the display apparatus by running the instructions stored in the internal memory 3103 and/or the instructions stored in the memory disposed in the main processor 3101.

The display apparatus may implement an audio function, such as music playing and making a call, by using the audio module 3104, the application processor and the like.

The audio module 3104 is configured to convert digital audio information into an analog audio signal for output, and is also configured to convert analog audio input into a digital audio signal. The audio module 3104 may be further configured to encode and decode the audio signal, for example, sound play or recording. In some embodiments, the audio module 3104 may be disposed in the main processor 3101, or some functional modules of the audio module 3104 are disposed in the main processor 3101.

The video interface 3109 may receive an audio and video signal input externally, and may be specifically a high definition multimedia interface (High Definition Multimedia Interface, HDMI), a digital visual interface (Digital Visual Interface, DVI), a video graphics array (Video Graphics Array, VGA), a display port (Display port, DP), or the like. The video interface 3109 may further output a video. When the display apparatus is used as a head-up display, the video interface 3109 may receive a speed signal and a power signal that are input by a surrounding device, and may further receive an AR video signal input externally. When the display apparatus is used as a projector, the video interface 3109 may receive a video signal input by an external computer or a terminal device.

The video module 3105 may decode a video input by the video interface 3109, for example, perform H.264 decoding. The video module may further encode a video collected by the display apparatus, for example, perform H.264 encoding on a video collected by an external camera. In addition, the main processor 3101 may also decode the video input by the video interface 3109, and then output a decoded image signal to the display circuit 3110.

The display circuit 3110 and the modulator 3111 are configured to display a corresponding image. In this embodiment, the video interface 3109 receives a video source signal input externally. The video module 3105 outputs one or more image signals to the display circuit 3110 after performing decoding and/or digitization processing. The display circuit 3110 drives, based on the input image signal, the modulator 3111 to perform imaging on polarized light that is incident, to output at least two paths of imaged light. In addition, the main processor 3101 may also output the one or more image signals to the display circuit 3110.

In this embodiment, the display circuit 3110 and the modulator 3111 belong to electronic components in the modulation unit 820 shown in FIG. 8. The display circuit 3110 may be referred to as a drive circuit.

The power supply module 3106 is configured to supply power to the main processor 3101 and a light source 3100 based on input power (for example, a direct current). The power supply module 3106 may include a rechargeable battery, and the rechargeable battery may supply power to the main processor 3101 and the light source 3100. Light emitted by the light source 3100 may be transmitted to the modulator 3111 for imaging, to form an image light signal.

The wireless communication module 3107 may enable the display apparatus to perform wireless communication with the outside, and may provide wireless communication solutions such as a wireless local area network (Wireless Local Area Network, WLAN) (such as a wireless fidelity (Wireless Fidelity, Wi-Fi) network), Bluetooth (Bluetooth, BT), a global navigation satellite system (Global Navigation Satellite System, GNSS), frequency modulation (Frequency Modulation, FM), a near field communication (Near Field Communication, NFC) technology, or an infrared (Infrared, IR) technology. The wireless communication module 3107 may be one or more components integrating at least one communication processor module. The wireless communication module 3107 receives an electromagnetic wave through an antenna, performs frequency modulation and filtering processing on an electromagnetic wave signal, and sends the processed signal to the main processor 3101. The wireless communication module 3107 may further receive a to-be-sent signal from the main processor 3101, perform frequency modulation and amplification on the signal, and convert, through the antenna, the signal into an electromagnetic wave for radiation.

In addition, in addition to being input through the video interface 3109, video data decoded by the video module 3105 may also be received in a wireless manner through the wireless communication module 3107 or be read from an external memory. For example, the display apparatus may receive video data from a terminal device or an in-vehicle infotainment system through a wireless local area network in a vehicle. The display apparatus may further read audio and video data stored in the external memory.

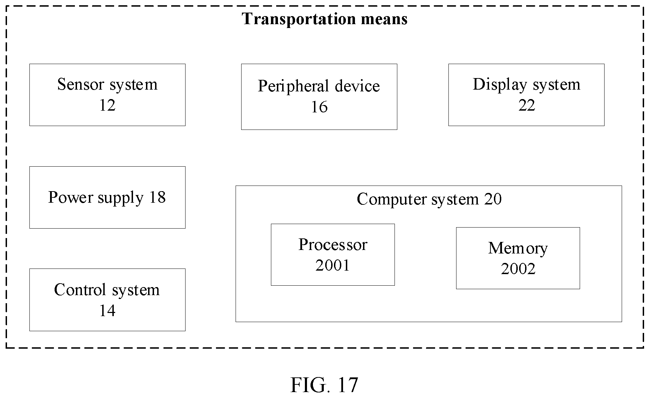

Refer to FIG. 17. The display apparatus may be installed on a transportation means. FIG. 17 is a diagram of a possible functional framework of a transportation means according to an embodiment of this application. As shown in FIG. 17, the functional framework of the transportation means may include various subsystems, for example, a sensor system 12, a control system 14, one or more peripheral devices 16 (one peripheral device is used as an example in the figure), a power supply 18, a computer system 20, and a display system 22. Optionally, the transportation means may further include another functional system, for example, an engine system that provides power to the transportation means. This is not limited herein in this application.

The sensor system 12 may include several detection apparatuses. The detection apparatuses can sense measured information, and convert the sensed information into an electrical signal or other information in a required form according to a specific rule for output. As shown in the figure, the detection apparatuses may include a global positioning system (global positioning system, GPS), a vehicle speed sensor, an inertial measurement unit (inertial measurement unit, IMU), a radar unit, a laser rangefinder, a camera apparatus, a wheel speed sensor, a steering sensor, a gear sensor, another element used for automatic detection, or the like. This is not limited in this application.

The control system 14 may include several elements, for example, a steering unit, a brake unit, a lighting system, a self-driving system, a map navigation system, a network time system, and an obstacle avoidance system shown in the figure. Optionally, the control system 14 may further include elements such as a throttle controller and an engine controller that are configured to control a driving speed of a vehicle. This is not limited in this application.

The peripheral device 16 may include several elements, for example, a communication system, a touchscreen, a user interface, a microphone, and a speaker shown in the figure. The communication system is configured to implement network communication between the transportation means and another device other than the transportation means. During actual application, the communication system may use a wireless communication technology or a wired communication technology to implement the network communication between the transportation means and the another device. The wired communication technology may mean that the vehicle communicates with the another device through a network cable, an optical fiber, or the like.

The power supply 18 represents a system used for providing power or energy for the vehicle, and may include but is not limited to a rechargeable lithium battery and lead-acid battery. During actual application, one or more battery modules in the power supply are configured to provide electrical energy or energy for starting the vehicle. A type and a material of the power supply are not limited in this application.

Several functions of the transportation means are all controlled and implemented by the computer system 20. The computer system 20 may include one or more processors 2001 (one processor is shown as an example in the figure) and a memory 2002 (which may also be referred to as a storage apparatus). During actual application, the memory 2002 is inside the computer system 20, or may be outside the computer system 20, for example, may be used as a cache in the transportation means. This is not limited in this application.

The processor 2001 may include one or more general-purpose processors, for example, a graphics processing unit (graphics processing unit, GPU). The processor 2001 may be configured to run a related program stored in the memory 2002 or instructions that correspond to a program and that are stored in the memory 2002, to implement a corresponding function of the vehicle.

The memory 2002 may include a volatile memory (volatile memory), for example, a RAM. The memory may alternatively include a non-volatile memory (non-volatile memory), for example, a ROM, a flash memory (flash memory), an HDD, or a solid-state drive SSD. The memory 2002 may further include a combination of the foregoing types. The memory 2002 may be configured to store a set of program code or instructions corresponding to program code, so that the processor 2001 invokes the program code or the instructions stored in the memory 2002 to implement a corresponding function of the vehicle. In this application, the memory 2002 may store a set of program code used for vehicle control. The processor 2001 may control safe driving of the vehicle by invoking the program code. A manner of implementing safe driving of the vehicle is specifically described in detail below in this application.

Optionally, in addition to storing the program code or the instructions, the memory 2002 may further store information such as a road map, a driving route, and sensor data. The computer system 20 may implement a vehicle-related function in combination with other elements in the diagram of the functional framework of the vehicle, such as the sensor and the GPS in the sensor system. For example, the computer system 20 may control a driving direction, a driving speed, or the like of the transportation means based on data input of the sensor system 12. This is not limited in this application.

The display system 22 may display image information, for example, display navigation information or play a video. For a specific structure of the display system 22, refer to the foregoing embodiment of the display apparatus. Details are not described herein again.

FIG. 17 in this application shows that four subsystems are included. The sensor system 12, the control system 14, the computer system 20, and the display system 22 are merely examples, and do not constitute a limitation. During actual application, the transportation means may combine several elements in the vehicle based on different functions, to obtain subsystems with corresponding different functions. During actual application, the transportation means may include more or fewer systems or elements. This is not limited in this application.

The transportation means may be a car, a truck, a motorcycle, a bus, a boat, an airplane, a helicopter, a lawn mower, a recreational vehicle, a playground vehicle, a construction device, a trolley, a golf cart, a train, a handcart, or the like. This is not specifically limited in embodiments of this application.

Unless otherwise defined, a technical term or a scientific term used herein should have a general meaning understood by a person of ordinary skill in the art of the present disclosure.

The foregoing descriptions are merely one embodiment of this application, but are not intended to limit this application. Any modification, equivalent replacement, improvement, or the like made based on this application shall fall within the protection scope of this application.

## Claims

1. A display apparatus, comprising an image source, a beam splitter, and a reflective element, wherein
the image source is configured to emit first image light and second image light to the beam splitter;
the beam splitter is configured to: transmit the first image light to the reflective element, and reflect the second image light to the reflective element; and
the reflective element is configured to reflect the first image light to generate a first image, and is further configured to reflect the second image light to a windshield to generate a second image.

2. The apparatus according to claim 1, wherein the beam splitter comprises a first semi-transparent and semi-reflective film and a glass substrate;
the first semi-transparent and semi-reflective film is attached to a first surface of the glass substrate; and
the first semi-transparent and semi-reflective film is configured to: transmit the first image light to the glass substrate, and reflect the second image light to the reflective element, and the first image light is transmitted to the reflective element through the glass substrate.

3. The apparatus according to claim 2, wherein the beam splitter further comprises a second semi-transparent and semi-reflective film;
the second semi-transparent and semi-reflective film is attached to a second surface of the glass substrate, and the second surface is opposite to the first surface; and
the second semi-transparent and semi-reflective film is configured to transmit, to the reflective element, the first image light from the glass substrate.

4. The apparatus according to any one of claims 1 to 3, wherein the reflective element is a curved mirror, the curved mirror comprises a first region and a second region, the first region is configured to reflect the first image light, and the second region is configured to reflect the second image light.

5. The apparatus according to any one of claims 1 to 3, wherein the reflective element comprises a first curved mirror and a second curved mirror;
the first curved mirror is configured to reflect the first image light; and
the second curved mirror is configured to reflect the second image light.

6. The apparatus according to claim 1, wherein the reflective element is further configured to reflect the first image light to the beam splitter, and the first image light is imaged by using the beam splitter.

7. The apparatus according to claim 6, wherein the reflective element comprises a first curved mirror and a second curved mirror;
the first curved mirror is configured to reflect the first image light to the beam splitter; and
the second curved mirror is configured to reflect the second image light to the windshield.

8. The apparatus according to claim 7, wherein the beam splitter comprises a first semi-transparent and semi-reflective film, a glass substrate, and a first polarizing element;
the first semi-transparent and semi-reflective film is attached to a first surface of the glass substrate;
the first semi-transparent and semi-reflective film is configured to: transmit the first image light to the glass substrate, and reflect the second image light to the second curved mirror, the first image light is transmitted to the first polarizing element through the glass substrate, and polarization directions of the first image light and the second image light are perpendicular;
the first polarizing element is configured to: convert, into first circularly polarized light, the first image light from the glass substrate, and convert, into first polarized light, second circularly polarized light from the first curved mirror, and rotation directions of the first circularly polarized light and the second circularly polarized light are different; and
the first semi-transparent and semi-reflective film is further configured to reflect the first polarized light, and a polarization direction of the first polarized light and the polarization direction of the second image light are the same.

9. The apparatus according to claim 7, wherein the beam splitter comprises a first semi-transparent and semi-reflective film, a glass substrate, a second semi-transparent and semi-reflective film, and a first polarizing element;
the first semi-transparent and semi-reflective film is attached to a first surface of the glass substrate, the second semi-transparent and semi-reflective film is attached to a second surface of the glass substrate, and the second surface is opposite to the first surface;
the first semi-transparent and semi-reflective film is configured to: transmit the first image light to the glass substrate, and reflect the second image light to the second curved mirror, the first image light is transmitted to the second semi-transparent and semi-reflective film through the glass substrate, and polarization directions of the first image light and the second image light are perpendicular;
the second semi-transparent and semi-reflective film is configured to transmit the first image light from the glass substrate;
the first polarizing element is configured to: convert, into first circularly polarized light, the first image light from the second semi-transparent and semi-reflective film, and convert, into first polarized light, second circularly polarized light from the first curved mirror, and rotation directions of the first circularly polarized light and the second circularly polarized light are different; and
the second semi-transparent and semi-reflective film is further configured to reflect the first polarized light, and a polarization direction of the first polarized light and the polarization direction of the second image light are the same.

10. The apparatus according to claim 8 or 9, wherein the first polarizing element is a 1/4 wave plate.

11. The apparatus according to any one of claims 1 to 10, wherein the image source comprises a second polarizing element and a third polarizing element;
the second polarizing element is configured to convert, into circularly polarized light, some output light beams from the image source; and
the third polarizing element is configured to convert the circularly polarized light into the second image light, and the polarization direction of the second image light and the polarization direction of the first image light are perpendicular.

12. The apparatus according to claim 11, wherein the second polarizing element is a 1/4 wave plate, and the third polarizing element is a 1/4 wave plate or a polarizer whose polarization direction is perpendicular to the polarization direction of the first image light.

13. The apparatus according to any one of claims 1 to 10, wherein the image source comprises a second polarizing element; and
the second polarizing element is configured to convert, into the second image light, some output light beams from the image source.

14. The apparatus according to claim 13, wherein the second polarizing element is a 1/2 wave plate.

15. The apparatus according to any one of claims 1 to 14, wherein the first image light and the second image light that are emitted by the image source are polarized light, and the polarized light comprises P light and S light.

16. The apparatus according to any one of claims 1 to 15, wherein the image source comprises a liquid crystal display LCD image source and an organic light-emitting diode OLED image source.

17. The apparatus according to any one of claims 1 to 15, wherein the image source further comprises a diffuser, the diffuser is configured to: generate the first image and the second image based on image light emitted by the image source, and emit the first image light and the second image light, and the image source comprises liquid crystal on silicon LCOS, a digital micromirror device (DMD), and a micro-electromechanical system MEMS.

18. A transportation means, comprising the display apparatus according to any one of claims 1 to 17.

19. The transportation means according to claim 18, wherein the display apparatus is installed at a position of a dashboard of the transportation means.

20. The transportation means according to claim 18 or 19, wherein the transportation means further comprises a windshield, the second image light emitted by the display apparatus is incident to the windshield, and the second image light is imaged by using the windshield.
